# EUROPEAN PATENT SPECIFICATION

(11) **EP 4 081 045 B1**
(45) Date of publication and mention of the grant of the patent: **13.05.2026**
(21) Application number: 20824925.0
(22) Date of filing: 15.12.2020
(51) Int. Cl.: A23K 20/158, A23K 40/25, A23K 40/30, A23K 50/80

(54) **FISH FEED PELLETS LOADED WITH A MICROBIAL OIL**
MIT EINEM MIKROBIELLEN ÖL BELADENE FISCHFUTTERPELLETS
GRANULÉS D'ALIMENT POUR POISSONS CHARGÉS D'UNE HUILE MICROBIENNE

(30) Priority: 23.12.2019 EP 19219194
(43) Date of publication of application: 02.11.2022
(73) Proprietor: DSM IP Assets B.V., 6221 BE Maastricht (NL); Evonik Operations GmbH, 45128 Essen (DE)
(72) Inventor: CLASADONTE, Laure, 4303 Kaiseraugst (CH); HAGEMANN, Nicholas, 4303 Kaiseraugst (CH); PALAZOGLU KURK, Pelin, 4303 Kaiseraugst (CH)
(74) Representative: dsm-firmenich IP
(86) International application number: PCT/EP2020/086142
(87) International publication number: WO 2021/130055

(56) References cited:
- WO-A1-2017/210426
- WO-A1-97/22265
- GB-A- 2 232 573
- US-A- 5 130 242
- US-A1- 2015 182 485

## Description

The present invention relates to a quick-sinking fish feed in the form of pellets, a process for preparing the same, as well as a process for increasing the sinking speed of fish feed, according to the appended claims.

Breeding of fish, preferably salmonids, i.e. salmon of various kinds, takes place, after setting out, in open seawater. The fish is kept confined in large net bags, and fodder-ing takes place by feed pellets being distributed at regular intervals on the marked-off surface of water. The fish eats the feed pretty soon after the distribution, as a rule when the feed begins to sink.

The size of the pellets depends on the size of the fish. Just after setting-out, in the so-called smolt stage, pellets having a diameter of about 2-3 mm are fed.

The mesh size of the enclosing net is greater than the diameters of the pellets.

The greater part of all fish feed is at present produced by so-called extrusion. Fish feed contains a large amount of protein and fat, since these nutritive substances are the best sources of energy for the fish.

Fish feed may have, for instance, the following approximate contents of nutritive substances:
∘ 46% by weight protein
∘ 26% by weight fat/oil
∘ 12% by weight carbohydrates
∘ 8% by weight ashes
∘ 8% by weight water

The ratio of protein to fat may vary depending on age and size of the fish to be fed.

The fat content usually is slightly more than 30%.

Fats are typically provided via incorporation of fish meals (which contain a minor amount of fish oil) and fish oils into the aquaculture feed compositions. Extracted oils that may be used in aquaculture feed compositions include fish oils (e.g., from the oily fish menhaden, anchovy, herring, capelin and cod liver), and vegetable oil (e.g., from soybeans, rapeseeds, sunflower seeds and flax seeds). Typically, fish oil is the preferred oil, because it contains the long chain omega-3 polyunsaturated fatty acids ["PUFAs"], EPA and DHA; in contrast, vegetable oils do not provide a source of EPA and/or DHA. These PUFAs are needed for growth and health of most aquaculture products. A typical aquaculture feed composition will comprise from about 15-30% of oil (e.g., fish, vegetable, etc.), measured as a weight percent of the aquaculture feed composition.

The protein supplied in aquaculture feed compositions can be of plant or animal origin. For example, protein of animal origin can be from marine animals (e.g., fish meal, fish oil, fish protein, krill meal, mussel meal, shrimp peel, squid meal, squid oil, etc.) or land animals (e.g., blood meal, egg powder, liver meal, meat meal, meat and bone meal, silkworm, pupae meal, whey powder, etc.). Protein of plant origin can include soybean meal, corn gluten meal, wheat gluten, cottonseed meal, canola meal, sunflower meal, rice and the like.

Feed pellets (such as aquatic feed pellets) according to the present invention may be extruded pellets. The extruded feed pellets may be produced by the following method.

A method of providing an extruded feed pellet, said method comprising the steps of:
a) grinding and/or mixing of at least a carbohydrate source, a protein source, a lipid source, ash, water and optionally one more ingredients selected from the group consisting of fish meal, krill meal, soya concentrate, corn gluten, wheat gluten, pea protein, wheat flour, fish oil, a vitamin, mineral premix, mineral premix plus synthetic phosphorus and combinations thereof into a powder mixture,
b) homogenizing the mixture in (a) until a paste is formed;
c) extruding the paste obtained in step (b) by an extrusion installation comprising a mold and a number of mixing and kneading zones, composed of a plurality of alternately forward and backward kneading screw elements;
d) cutting of the extruded material into porous pellets of a suitable length when it exits the die;
e) drying of the porous pellets;
f) adding a composition with a coating oil to the pellets obtained in step (e) and adsorbing said oil into the porous pellet under vacuum, and
g) cooling of the pellets, and
h) obtaining a coated fish feed pellet.

In preferred examples the final feed pellets comprises 10 to 40% w/w, for example 15 to 30% w/w coating oil.

The coating oil currently used in the production of fish feed pellets is fish oil or a mixture of fish oil with vegetable oils.

It is known that pellets, the diameter of which is < 4 mm, have difficulty in sinking, especially in the cold time of the year when the density of water is at its maximum. The reason why the feed does not sink is its low intrinsic weight and the too high surface tension. If the fish does not have time to catch the feed, the pellets will be moved by the waves of the sea through the meshes out into the free water. This is on the one hand an economic problem and, on the other hand, an environmental problem.

NO Patent Specification 911,946 discloses a method of modulating the sedimentation speed of dry fish feed pellets by admixing to the pellets a surface-active agent, selected among certain fatty acid esters having an HLB value (hydrophilic-lipophilic balance) of not less than 12 so as to increase the sedimentation speed of the pellets and certain fatty acid esters having an HBL value of less than 8 to decrease the sedimentation speed of the pellets. GB2 232 573A relates to a process for preparing feed pellets of improved physical or nutritional characteristics, which comprises surface treating solid edible feed pellets with a controlled quantity of an edible liquid and subjecting the treated pellets to conditions of sub atmospheric pressure to absorb edible liquid into the pellets, and recovering the pellets containing absorbed liquid in solid, discrete form.

### SHORT DESCRIPTION OF THE INVENTION

It has now been surprisingly found that the sedimentation speed of fish feed pellets can be modulated and the problem be solved by adding a microbial oil to the coating oil, i.e. by loading or coating fish feed pellets with a coating oil comprising at least 10% w/w microbial oil.

In a preferred embodiment, the microbial oil is an oil obtained from an algae.

Preferred microbes are Thraustochytrids which are microorganisms of the order Thraustochytriales. Thraustochytrids include members of the genus *Schizochytrium* and *Thraustochytrium* and have been recognized as an alternative source of omega-3 fatty acids, including DHA and EPA. See U.S. Patent No. 5,130,242.

In a preferred embodiment of the invention, the concentration of DHA in the microbial oil is at least 30%, preferably at least 32%, preferably at least 35%, preferably at least 37%, preferably at least 38%, measured as a weight percent of the oil.

In a further preferred embodiment of the invention, the concentration of EPA in the microbial oil is at least 5%, preferably at least 6%, preferably at least 7%, preferably at least 8%, preferably at least 9%, preferably at least 10%, preferably at least 11%, preferably at least 12 %, measured as a weight percent of the microbial oil.

### DEFINITIONS

Feed or Aquaculture feed: The term "Feed" or "Aquaculture feed" refers to any compound, preparation, or mixture suitable for, or intended for intake by aquatic animals. An animal feed for aquatic animals typically comprises high protein and energy concentrations, such as fish meal, molasses, oligosaccharide concentrates as well as vitamins, minerals, enzymes, direct fed microbial, amino acids and/or other feed ingredients (such as in a premix). Aquaculture feed refers to a manufactured or artificial diet (i.e., formulated feed) to supplement or to replace natural feed, which is most commonly produced in form of flakes or pellets.

Eicosapentaenoic acid [EPA]: The term "Eicosapentaenoic acid" ["EPA"] is the common name for *eis-5, 8*, 11,14, 17-eicosapentaenoic acid. This fatty acid is a 20:5 omega-3 fatty acid. The term EPA as used in the present disclosure will refer to the acid or derivatives of the acid (e.g., glycerides, esters, phospholipids, amides, lactones, salts or the like) unless specifically mentioned otherwise.

Docosahexaenoic acid [DHA]: The term "Docosahexaenoic acid" ["DHA"] is the common name for *eis-4, 7*, 10, 13, 16, 19-docosahexaenoic acid. This fatty acid is a 22:6 omega-3 fatty acid. The term DHA as used in the present disclosure will refer to the acid or derivatives of the acid (e.g., glycerides, esters, phospholipids, amides, lactones, salts or the like) unless specifically mentioned otherwise.

Fish oil: The term "Fish oil" refers to oil derived from the tissues of an oily fish. Examples of oily fish include, but are not limited to: menhaden, anchovy, herring, capelin, cod and the like. Fish oil is a typical component of feed used in aquaculture.

Vegetable oil: "Vegetable oil" refers to any edible oil obtained from a plant. Typically plant oil is extracted from seed or grain of a plant. A typical vegetable for use according to the invention is Rapeseed oil.

Microbial oil: The term "microbial oil" refers to oil that has been separated from cellular materials, such as the microorganism in which the oil was synthesized. Microbial oils are obtained through a wide variety of methods, the simplest of which involves physical means alone. For example, mechanical crushing using various press configurations (e.g., screw, expeller, piston, bead beaters, etc.) can separate oil from cellular materials. Alternatively, oil extraction can occur via treatment with various organic solvents (e.g., hexane), via enzymatic extraction, via osmotic shock, via ultrasonic extraction, via supercritical fluid extraction (e.g., CO₂ extraction), via saponification and via combinations of these methods. The extracted oil may be further purified or concentrated.

### DETAILED DESCRIPTION OF THE INVENTION

The present invention provides a new and simple process of pronouncedly increasing the sinking speed of fish feed in the form of pellets of the above-mentioned type, whereby they are not affected by the waves of the sea.

As mentioned above, the "sinking speed" problem is solved by loading or coating the fish feed pellets with a coating oil comprising at least 10% w/w microbial oil, preferably at least 50% w/w microbial oil.

In particular, the invention provides a quick-sinking fish feed in the form of pellets, which is characterized in that the pellet is coated or loaded with a coating oil containing at least 10% w/w microbial oil, preferably at least 50% w/w microbial oil.

In preferred examples the coating oil comprises 50 or 100% w/w microbial oil. If the coating oil comprises 50 w/w microbial oil, the coating oil is for example a 1:1 mixture of microbial oil and rapeseed oil.

The present invention also provides a method of modulating the sedimentation or sinking speed of dry fish feed pellets by admixing the coating oil with a variable ratio of at least two different oil-sources selected from microbial oil vegetable oil, and fish oil.

The method of the invention includes coating oil mixtures with variable ratios of selected oil sources for modulating the sinking/sedimentation speed which are:

| | |
|---|---|
| Vegetable oil : Microbial oil | 1:1; 2:1; 5:1; 10:1; 15:1; 20:1; 25:1; 1:2; 1:5; 1:10 |
| Fish oil : Microbial oil | 1:1; 2:1; 5:1; 10:1; 15:1; 20:1; 25:1; 1:2; 1:5; 1:10 |

For modulating the sinking/sedimentation speed of fish feed pellets vegetable and fish oil are used to finetune, i.e. reduce the pronounced sinking speed effect surprisingly observed for the microbial oil, in particular algal oil.

The present invention provides a new and simple process of pronouncedly increasing the sinking speed of fish feed in the form of pellets of the above-mentioned type, whereby they are not affected by the waves of the sea.

With a view to providing the pellets according to the invention, the pellets are loaded or coated with a coating oil rich in PUFAs, wherein the oil comprises at least 10% microbial oil, which is algal oil.

In a preferred embodiment, the microbial oil is an oil derived from a species of *Schizochytrium* sp. ATCC PTA-10208, as for example the commercial oil product available under the Trademark Veramaris^{®}.

As mentioned above, the main part of the fish feed is present in the form of pellets which are prepared by so-called extrusion. The extrusion is principally carried out in the following manner:
- The dry ingredients are mixed. Immediately before or during the extrusion, part of the fat and water are added, such that the fat content during extrusion is between about 15 and 20t by weight and the water content is slightly above 20 by weight. In the extruder, the material is subjected to vigorous mechanical working in combination with high pressure and high temperature.
- This treatment results in an expanded feed of high meltability. At the end of the extruder there is arranged a nozzle, through which the material passes, and after that, a rotary cutter which cuts the material to a suitable size. By varying the size of the nozzle and the speed of the cutter, the size of the feed pellets can be adapted to the fish to be fed. Immediately after extrusion, the pellets are dried, whereupon the remaining amount of fat is added, either by immersion in a hot oil bath or by spraying. Finally the pellets are cooled.

So far, the preparation of the pellets according to the invention conforms with the preparation of pellets that are known hitherto.

It may be contemplated that the extruded feed pellet(s) has a DORIS value in the range from 75-100%. The DORIS value is measured on a DORIS tester (Durability on a Realistic Test) (Akvasmart, AKVA group ASA, Bryne, Norway). The DORIS tester is designed to mimic the pellet degradation during pneumatic feeding system. The result is between 0% and 100%, and corresponds to the mass fraction (m/m) of whole pellets after DORIS exposure relative to the initial sample mass.

It may also be contemplated that the extruded feed pellets of the present invention has a pellet hardness in the range from 20-100N. The pellet hardness is determinded on a pellet strength texture analyzer from Stable Micro Systems Ltd, Godalming, More specifically a TA-XT plus Texture Analyzer (TA) from Stable Micro Systems mounted with a cylindrical probe (P/40) was used to determine pellet hardness.

The feed pellets can be fed to all types of fish, including cold-water fish and shrimp. Some examples are turbot, halibut, yellow tail salmon, trout, bream, bass and tuna. The feed is particularly suitable for feeding salmonids, including Atlantic salmon (Salmo salar), other salmon species and trout, and non-salmonids such as cod, sea bass, sea bream and eel. It is suitable for feeding salmon, trout, bream and/or bass in the fresh water (FW) phase and the in the sea water (SW) phase and in the period after hatching and until slaughter and in all stages, such as fry, fingerlings, parr, smolts and adult fish.

In a particular preferred embodiment of the present invention, the aquatic animal is a fish or a decapod crustacean.

The fish may be any kind of fish such as but not limited to a fish selected from the group consisting of salmon, trout, sea bream, sea bass, cod, eel, turbot, halibut, yellow tail, tuna, carp, tilapia and catfish. In a particular preferred embodiment, the fish is selected from the group consisting of salmon, trout, sea bream and sea bass.

The salmon may be of the family Salmonidae and of the subfamily of Salmoninae. In one embodiment the salmon is selected from the group consisting of the genus Salmo, Oncorhynchus and Salvenis. In a further embodiment the genus Salmo is selected from the group consisting of Atlantic salmon (Salmo salar) and Brown trout (Salmo trutta). In yet an embodiment the genus Oncorhynchus is selected from the group consisting of Chinook salmon (Oncorhynchus tshawytsch), Rainbow trout (Oncorhynchus mykiss), Sockeye salmon (Oncorhynchus nerka) and Coho salmon (Oncorhynchus kisutch). In a further embodiment the genus Salvenis is selected from the group consisting of Arctic charr (Salvelinus alpinus), Brook trout (Salvelinus fontinalis) and Lake trout (Salvelinus namaycush).

The sea bream may be gilt-head sea bream (Sparus aurata) wheras the sea bass may be European bass (Dicentrarchus labrax)

In a preferred embodiment of the present invention the decapod crustacean may be shrimp or prawn.

The shrimp may be selected from the group consisting of Pacific white shrimp (Penaeus vannamei or Litopenaeus vannamei), Whiteleg shrimp (Penaeus vannamei or Litopenaeus vannamei), Black tiger shrimp (Penaeus monodon), Kuruma shrimp (Penaeus japonicas or Marsupenaeus japonicas), Western blue shrimp (Penaeus stylirostris or Litopenaeus stylirostris), blue shrimp (Penaeus stylirostris or Litopenaeus stylirostris), Chinese white shrimp (Penaeus chinensis or Fenneropenaeus chinensis), Oriental shrimp (Penaeus chinensis or Fenneropenaeus chinensis), Indian white shrimp (Penaeus indicus or Fenneropenaeus indicus), Banana shrimp (Penaeus merguiensis or Fenneropenaeus merguiensis), Akiami paste shrimp (Metapenaeus spp.), yellowleg shrimp (Penaeus californiensis or Farfantepenaeus californiensis), brown shrimp (Penaeus californiensis or Farfantepenaeus californiensis), São Paulo shrimp (Penaeus paulensis or Farfantepenaeus paulensis), Carpas shrimp (Penaeus paulensis or Farfantepenaeus paulensis), redspotted shrimp (Penaeus brasiliensis or Farfantepenaeus brasiliensis), spotted pink shrimp (Penaeus brasiliensis or Farfantepenaeus brasiliensis)and southern white shrimp (Penaeus schmitti).

The prawn may be selected from the group consisting of King prawn (Penaeus vannamei or Litopenaeus vannamei), Giant tiger prawn (Penaeus monodon), Giant Freshwater Prawn (Macrobrachium rosenbergii), Giant river prawn (Macrobrachium rosenbergii), Malaysian prawn (Macrobrachium rosenbergii), Kuruma prawn (Penaeus japonicas or Marsupenaeus japonicas), Fleshy prawn (Penaeus chinensis or Fenneropenaeus chinensis), Indian prawn (Penaeus indicus or Fenneropenaeus indicus), Banana prawn (Penaeus merguiensis or Fenneropenaeus merguiensis), Oriental river prawn (Macrobrachium nipponense) and Monsoon river prawn (Macrobrachium mal-colmsonii).

Microbial oils according to the present invention comprise DHA and optionally EPA. The oils may be provided in a variety of forms for use in the aquaculture feed compositions herein, wherein the oil is typically a partially purified or purified oil.

As mentioned above, the oil producing microorganism can be a wildtype or mutant strain of the species *Schizochytrium. Schizochytrium* strains are natural sources of PUFAs such as DHA and can be optimized by mutagenesis to be used as microbial source according to the present invention.

Such a microbe may be cultured and grown in a fermentation medium under conditions whereby the PUFAs are produced by the microorganism. Typically, the microorganism is fed with a carbon and nitrogen source, along with a number of additional chemicals or substances that allow growth of the microorganism and/or production of EPA and DHA. The fermentation conditions will depend on the microorganism used and may be optimized for a high content of the desired PUFA(s) in the resulting biomass.

In general, media conditions may be optimized by modifying the type and amount of carbon source, the type and amount of nitrogen source, the carbon-to-nitrogen ratio, the amount of different mineral ions, the oxygen level, growth temperature, pH, length of the biomass production phase, length of the oil accumulation phase and the time and method of cell harvest.

When the desired amount of EPA and DHA has been produced by the microorganism(s), the fermentation medium may be treated to obtain microbial biomass comprising the PUFA(s). For example, the fermentation medium may be filtered or otherwise treated to remove at least part of the aqueous component. The fermentation medium and/or the microbial biomass may be further processed, for example the microbial biomass may be pasteurized or treated via other means to reduce the activity of endogenous microbial enzymes that can harm the microbial oil and/or PUFAs. The microbial biomass may be subjected to drying (e.g., to a desired water content) or a means of mechanical disruption (e.g., via physical means such as bead beaters, screw extrusion, etc. to provide greater accessibility to the cell contents), or a combination of these. The microbial biomass may be granulated or pelletized for ease of handling. Thus, microbial biomass obtained from any of the means described above may be used as a source of microbial oil comprising EPA and DHA. The microbial oil may be finally extracted from the biomass according to methods described in EP 1'513'922 or US 6'750'048.

A preferred microbial oil according to the invention is a crude oil derived form a strain of the species *Schizochytrium* comprising oleic acid (18:1n-9) in the range 0.28 - 229.15 g/kg feed, linoleic acid in the range 0.22 - 233.24 g/kg feed, alfa-linolenic acid in the range 0.28-225.06 g/kg, arachidonic acid (ARA, 20:4 n-6) in the range 0,03 - 24.55 g/kg, eicosapentaenoic acid (EPA, 20:5 n-3) in the range 0.03 - 73.66 g/kg and docosahexaenoic acid (DHA, 22:6 n-3) in the range 0.03 - 73.66 g/kg.

### EXAMPLES

### EXAMPLE 1: Preparation of Pressed Fish Feed

The main raw materials are ground and mixed. Micro-ingredients are then added to the mixer and the homogenous mix is conditioned by adding water and steam to the mass in a preconditioner. This starts a cooking process in the starch fraction (the binding component). The mass is fed into a pellet mill. The mass is forced through the mill's die and the strings are broken into pellets on the outside of the die. The moisture content is low and drying of the feed is not necessary.

Additional oil including a fish feed composition according to the present invention is then sprayed onto the surface of pellets, but as the pellets are rather compact, the total lipid content rarely exceeds 24 %. The added oil may be fish oil, microbial/algal or vegetable oils, for example rape seed oil or soy oil, or a mixture of oils. After oil coating, the pellets are cooled in a cooler and bagged. The final pressed fish feed contains 10 to 5000 ppm of the composition as described in the invention.

### Example 2: Method for Preparation of Extruded Fish Feed

The main raw materials are ground and mixed. Micro ingredients incl. a fish feed composition according to the invention are added to the mixer. The homogenous mix is conditioned by adding water and steam to the mass in a preconditioner. Additional oil may also be added to the mass at this stage. This starts a cooking process in the starch fraction (the binding component). The mass is fed into an extruder. The extruder may be of the single screw or the twin-screw type. Due to the rotational movement of the mass in the extruder, the mass is further mixed. Additional oil, water and steam may be added to the mass in the extruder. At the end of the extruder, the mass has a temperature above 100 °C and a pressure above ambient pressure. The mass is forced through the openings in the extruder's die plate. Due to the relief in temperature and pressure, some of the moisture will evaporate immediately (flash off) and the extruded mass becomes porous. The strings are cut into pellets by a rotating knife. The water content is rather high (18-28 %) and the pellets are therefore immediately dried to approximately 10 % water content in a dryer.

After the dryer, more oil including a feed additive composition according to the invention may be added to the feed by spraying oil onto the surface of the feed, or by dipping the feed in oil. It is advantageous to add the oil to the feed in a closed vessel where the air pressure is below ambient (vacuum coating) so that the porous feed pellets absorb more oil. Feed containing more than 40 % lipid may be produced this way. After the coater, the feed is cooled and bagged. Oil may be added at several places in the process as explained above, and may be fish oil, microbial/algal or vegetable oils, by example rape seed oil or soy oil, or a mixture of oils.

Fish need protein, fat, minerals and vitamins in order to grow and to be in good health. The diet of carnivorous fish is particularly important. Originally in the farming of carnivorous fish, whole fish or ground fish were used to meet the nutritional requirements of the farmed fish. Ground fish mixed with dry raw materials of various kinds, such as fish meal and starch, was termed soft or semi-moist feed. As farming became industrialized, soft or semi-moist feed was replaced by pressed dry feed. This was itself gradually replaced by extruded dry feed.

Today, extruded feed is nearly universal in the farming of a number of fish species such as various types of salmonid, cod, sea bass and sea bream.

The dominant protein source in dry feed for fish has been fish meal of different qualities. Other animal protein sources are also used for dry fish feed. Thus, it is known to use blood meal, bone meal, feather meal and other types of meal produced from other slaughterhouse waste, for example chicken meal. These are typically cheaper than fish meal and fish oil. However, in some geographic regions, there has been a prohibition against using such raw materials in the production of feeds for food-producing animals and fish.

It is also known to use vegetable protein such as wheat gluten, maize (corn) gluten, soya protein, lupin meal, pea meal, bean meal, rape meal, sunflower meal and rice flour.

### EXAMPLE 3: Rate of descent /sinking speed of different fish feed pellets

Examples of pellets according to example 2 are loaded/coated with 22% coating oil as follows:
22% Algal oil, rich in DHA and EPA (AO)
22 % Fish oil (FO)
22 % Rapeseed oil (RO)
*11% AO & 11% FO*
*11% AO & 11% RO*
*11% FO & 11% RO*

The sinking speed was measured according to standard technique at 4°C and is shown in table 1.

**Table 1:**

| | ***22% AO*** | ***22% FO*** | ***22% RO*** | ***11% AO*** | ***11% AO*** | ***11% FO*** |
|---|---|---|---|---|---|---|
| | | | | ***11% FO*** | ***11% RO*** | ***11%RO*** |
| ***Sinking speed (m*/*s)*** | ***17,64*** | *12,68* | *12,2* | ***18, 72*** | ***15,56*** | *12,4* |

## Claims

1. A fish feed in the form of pellets, wherein the feed pellet is coated with a coating oil, **characterized in that** the coating oil comprises at least 10% w/w microbial oil,
wherein the microbial oil is an algal oil, and
wherein said algal oil comprises oleic acid (18:1n-9) in the range 0.28 - 229.15 g/kg feed, linoleic acid in the range 0.22 - 233.24 g/kg feed, alfa-linolenic acid in the range 0.28-225.06 g/kg, arachidonic acid (ARA, 20:4 n-6) in the range 0,03 - 24.55 g/kg, eicosapentaenoic acid (EPA, 20:5 n-3) in the range 0.03 - 73.66 g/kg and docosahexaenoic acid (DHA, 22:6 n-3) in the range 0.03 - 73.66 g/kg.

2. The fish feed pellet according to claim 1, wherein the feed pellet is an extruded feed pellet or a pressed feed pellet.

3. The fish feed pellet according to claim 1 or 2, wherein the coating oil comprises 50% w/w microbial oil.

4. The fish feed pellet according to any of claims 1 to 3, wherein said coating oil further comprises fish oil and/or one or more vegetable oil(s).

5. The fish feed pellet according to claim 4, wherein the vegetable oil is selected from the group consisting of rape seed oil, soy oil and camelina oil.

6. A method of modulating the sedimentation or sinking speed of dry fish feed pellets **characterized by** admixing the coating oil with a variable ratio of at least two different oil-sources selected from microbial oil vegetable oil, and fish oil and wherein the variable ratio of said at least two different oil-sources is selected from a) Vegetable oil : Microbial oil 1:1; 2:1; 5:1; 10:1; 15:1; 20:1; 25:1; 1:2; 1:5 or 1:10, or
b) Fish oil : Microbial oil 1:1; 2:1; 5:1; 10:1; 15:1; 20:1; 25:1; 1:2; 1:5 or 1:10.

## Patentansprüche

1. Fischfutter in Form von Pellets, wobei das Futterpellet mit einem Überzugsöl überzogen wird, **dadurch gekennzeichnet, dass** das Überzugsöl mindestens 10 Gew.-% mikrobielles Öl umfasst,
wobei es sich bei dem mikrobiellen Öl um Algenöl handelt und
wobei das Algenöl Ölsäure (18:1n-9) im Bereich von 0,28-229,15 g/kg Futter, Linolsäure im Bereich von 0,22-233,24 g/kg Futter, alpha-Linolensäure im Bereich von 0,28-225,06 g/kg, Arachidonsäure (ARA, 20:4 n-6) im Bereich von 0,03-24,55 g/kg, Eicosapentaensäure (EPA, 20:5 n-3) im Bereich von 0,03-73,66 g/kg und Docosahexaensäure (DHA, 22:6 n-3) im Bereich von 0,03-73,66 g/kg umfasst.

2. Fischfutterpellet nach Anspruch 1, wobei es sich bei dem Futterpellet um ein extrudiertes Futterpellet oder ein gepresstes Futterpellet handelt.

3. Fischfutterpellet nach Anspruch 1 oder 2, wobei das Überzugsöl 50 Gew.-% mikrobielles Öl umfasst.

4. Fischfutterpellet nach einem der Ansprüche 1 bis 3, wobei das Überzugsöl ferner Fischöl und/oder ein oder mehrere Pflanzenöl(e) umfasst.

5. Fischfutterpellet nach Anspruch 4, wobei das Pflanzenöl aus der Gruppe bestehend aus Rapsöl, Sojaöl und Leindotteröl ausgewählt ist.

6. Verfahren zum Modulieren der Sedimentations- oder Sinkgeschwindigkeit von trockenen Fischfutterpellets, **dadurch gekennzeichnet, dass** das Überzugsöl mit einem unterschiedlichen Verhältnis von mindestens zwei verschiedenen Ölquellen vermengt wird, die aus mikrobiellem Öl, Pflanzenöl und Fischöl ausgewählt sind, und wobei das unterschiedliche Verhältnis der mindestens zwei verschiedenen Ölquellen aus Folgendem ausgewählt ist: a) Pflanzenöl: mikrobiellem Öl 1:1; 2:1; 5:1; 10:1; 15:1; 20:1; 25:1; 1:2; 1:5 oder 1:10 oder
b) Fischöl: mikrobiellem Öl 1:1; 2:1; 5:1; 10:1; 15:1; 20:1; 25:1; 1:2; 1:5 oder 1:10.

## Revendications

1. Aliment pour poissons sous forme de granulés, dans lequel le granulé d'aliment est enrobé avec une huile d'enrobage, **caractérisé en ce que** l'huile d'enrobage comprend au moins 10 % en p/p d'huile microbienne,
dans lequel l'huile microbienne est une huile d'algue, et
dans lequel ladite huile d'algue comprend de l'acide oléique (18:1n-9) dans la plage de 0,28 à 229,15 g/kg d'aliment, de l'acide linoléique dans la plage de 0,22 à 233,24 g/kg d'aliment, de l'acide alfa-linolénique dans la plage de 0,28 à 225,06 g/kg, de l'acide arachidonique (ARA, 20:4 n-6) dans la plage de 0,03 à 24,55 g/kg, de l'acide eicosapentaénoïque (EPA, 20:5 n-3) dans la plage de 0,03 à 73,66 g/kg et de l'acide docosahexaénoïque (DHA, 22:6 n-3) dans la plage de 0,03 à 73,66 g/kg.

2. Granulé d'aliment pour poissons selon la revendication 1, dans lequel le granulé d'aliment est un granulé d'aliment extrudé ou un granulé d'aliment pressé.

3. Granulé d'aliment pour poissons selon la revendication 1 ou 2, dans lequel l'huile d'enrobage comprend 50 % en p/p d'huile microbienne.

4. Granulé d'aliment pour poissons selon l'une quelconque des revendications 1 à 3, dans lequel ladite huile d'enrobage comprend en outre de l'huile de poisson et/ou une ou plusieurs huiles végétales.

5. Granulé d'aliment pour poissons selon la revendication 4, dans lequel l'huile végétale est choisie dans le groupe constitué par l'huile de colza, l'huile de soja et l'huile de caméline.

6. Procédé de modulation de la vitesse de sédimentation ou d'enfoncement de granulés d'aliments secs pour poissons, **caractérisé par** le mélange de l'huile d'enrobage avec un rapport variable d'au moins deux sources d'huile différentes choisies parmi une huile végétale microbienne et une huile de poisson et dans lequel le rapport variable desdites au moins deux sources d'huile différentes est choisi parmi a) huile végétale : huile microbienne 1:1 ; 2:1 ; 5:1 ; 10:1 ; 15:1 ; 20:1 ; 25:1 ; 1:2 ; 1:5 ou 1:10, ou
b) huile de poisson : huile microbienne 1:1 ; 2:1 ; 5:1 ; 10:1 ; 15:1 ; 20:1 ; 25:1 ; 1:2 ; 1:5 ou 1:10.
